(19) Europäisches Patentamt
European Patent Office
Office européen des brevets

(11) **EP 4 242 933 A1**

(12) **EUROPEAN PATENT APPLICATION**

(43) Date of publication:
**13.09.2023  Bulletin 2023/37**

(51) International Patent Classification (IPC):
***G06N 10/20*** *(2022.01)*

(21) Application number: **22161497.7**

(52) Cooperative Patent Classification (CPC):
**G06N 10/20**

(22) Date of filing: **11.03.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **IQM Finland Oy**
**02150 Espoo (FI)**

(72) Inventors:
• **PINA CANELLES, Vicente**
  **Munich (DE)**

• **HEIMONEN, Hermanni**
  **Espoo (FI)**
• **LAMPRICH, Julia**
  **Munich (DE)**
• **WURZ, Nicola**
  **Munich (DE)**
• **KU, Hsiang-Sheng**
  **Munich (DE)**

(74) Representative: **Berggren Oy**
**P.O. Box 16**
**Eteläinen Rautatiekatu 10A**
**00101 Helsinki (FI)**

(54) **QUANTUM COMPUTATION ON A SPECIFIC QPU TOPOLOGY**

(57)    The invention relates to the field of quantum computing. The invention includes a method for determining a control sequence for performing digital-analog quantum computation on a quantum processing unit with a star topology. The use of a QPU with this topology enables a significant reduction in the number of single qubit gates that must be applied to the system, thereby reducing circuit depth and reducing error. The invention also include a method for performing digital-analog quantum computation on a QPU with a star topology.

*FIG. 1*

**Description**

**Technical Field**

The present invention relates to the field of quantum computing.

**Background**

Digital-analog quantum computation (DAQC) is a paradigm for quantum computation in which the "analog" Hamiltonian corresponding to the natural evolution of qubits can be used, along with "digital" single-qubit gates, to perform universal quantum computations by effectively engineering an arbitrary Hamiltonian.

DAQC can be implemented in two ways: stepwise DAQC (sDAQC) and banged DAQC (bDAQC). In sDAQC, entangling operations, i.e. analogue Hamiltonian evolution of the qubits, are turned on and off repeatedly throughout the computation. In bDAQC, single-qubit gates are applied simultaneously with the entangling operations, which are constantly on throughout the computation.

A significant source of errors in stepwise DAQC arises from turning multi-qubit interactions on and off. Banged DAQC was introduced in order to mitigate these errors by leaving the analog multi-qubit interactions turned on throughout the computation; however, the singe qubit gates applied to each qubit do not commute with the terms relevant to that qubit in the Hamiltonian describing the analog multi-qubit interactions, therefore the evolution of the state of the qubit when the single qubit gate is applied is not exactly the same as in the idealised stepwise DAQC model.

**Summary of the Invention**

A first aspect of the invention relates to a computer-implemented method for determining a control sequence for performing digital-analog quantum computation, DAQC, on a quantum processing unit. At a high level, the control sequence may be a sequence of analog blocks and single qubit gates to be applied to the quantum processing unit. Alternatively, the control sequence may be an intermediate representation such as OpenQASM, at a hardware interaction level such as defining control signals to be applied to the qubits, or any suitable description of the parameters needed to perform the DAQC.

The quantum processing unit for which the control sequence is determined comprises a central qubit $q_0$ and a plurality of external qubits $q_1$ to $q_{N-1}$, each external qubit being connected directly to the central qubit. The method comprises receiving coupling coefficients of a target Hamiltonian and a time $t_F$ after which the quantum state of a system described by the target Hamiltonian is to be calculate, determining a sequence of analog blocks to be applied to the central and external qubits, during which the quantum states of the central qubit and external qubits evolve according to a resource Hamiltonian, and determining a sequence of single-qubit gates to be applied to the external qubits.

Determining the sequence of analog blocks to be applied to the central and external qubits may comprise determining the durations $t_1$ to $t_{N-1}$ of the analog blocks $A_1$ to $A_{N-1}$ based on the coupling coefficients of the target Hamiltonian and the resource Hamiltonian. Determining the sequence of analog blocks $A_k$ may further comprise placing the analog blocks in sequence based on their indices k and omitting analog blocks $A_k$ with duration $t_k = 0$.

Determining the sequence of single qubit gates may comprise placing the single qubit gates in the sequence such that single-qubit gates are applied to qubits $q_{j+1}$ to $q_{k-1}$ at the end of or after each analog block $A_j$ with non-zero duration $t_j$ and $j < N - 1$, and where $A_k$ is the next analog block with non-zero duration $t_k$.

The analog blocks may be applied continuously, and the single-qubit gates are applied simultaneously with the analog blocks at the end of each analog block according to the banged DAQC paradigm. Alternatively, the analog blocks may be applied discretely, and the single-qubit gates are applied serially in between the analog blocks according to the stepwise DAQC paradigm.

Determining the sequence of analog blocks may comprise determining the time durations $t_1$ to $t_{N-1}$ of the analog blocks according to the following equations:

$$\frac{t_k}{t_F} = \frac{G_k - G_{k+1}}{2}$$

$$\frac{t_{N-1}}{t_F} = \frac{G_1 + G_{N-1}}{2}$$

where $G_j = g_j/\overline{g}_j$, $g_j$ is the $j$th coupling coefficient of the target Hamiltonian and $\overline{g}_j$ is the $j$th coupling coefficient of the resource Hamiltonian. Determining the sequence of analog blocks may comprises determining a sequence of analog blocks with a non-zero duration $t_k$.

Determining the sequence of single-qubit gates may comprise placing single-qubit gates applied to qubits $q_{j+1}$ to $q_{N-1}$ at the beginning and end, or before and after, each analog block $A_j$ with non-zero duration $t_j$ and $j < N - 1$, and removing consecutive pairs of single-qubit gates.

The sequence of single-qubit gates may further comprise applying single-qubit gates to all qubits $q_2$ to $q_{N-1}$ at the start of or before the first analog block.

The method further comprises outputting the determined control sequence. Outputting the control sequence may comprise providing the output in some machine- or human-readable format such as a quantum circuit or intermediate representation such as OpenQASM. Alternatively, the control sequence may be an intermediate representation such as OpenQASM, at a hardware interaction level such as defining control signals to be applied to the qubits, or any suitable description of the parameters needed to perform the DAQC.

A second aspect of the invention relates to method for performing digital-analog quantum computation, DAQC, on a quantum processing unit. The quantum processing unit on which the DAQC is performed comprised a central qubit $q_0$ and a plurality of external qubits $q_1$ to $q_{N-1}$, each external qubit being connected directly to the central qubit. The method comprises:

- preparing initial quantum states in the central qubit and external qubits;
- turning on interactions between the central qubit and external qubits such that the quantum states of the central qubit and external qubits evolve according to a resource Hamiltonian; and
- applying a sequence of single-qubit gates to the external qubits to modify the evolution of the quantum states of the central qubit and external qubits such that the quantum state of the central qubit and external qubits after a time period $t_F$ corresponds to evolution of the quantum states according to a target Hamiltonian after the time period $t_F$.

The sequence of two-qubit gates and time intervals between the application of single-qubit gates may be controlled in order to modify the evolution of the state of the central qubit and external qubits to correspond to the target Hamiltonian.

When the stepwise DAQC paradigm is used, the method may further comprise:

- before each single-qubit gate is applied to the central qubit and one of the external qubits, turning off interactions between the central qubit and the remaining external qubits; and
- after each single-qubit gate is applied to the central qubit and one of the external qubits, turning interactions between the central qubit and the remaining external qubits back on.

When the banged DAQC paradigm is used, the sequence of single-qubit gates and time periods between the application of single-qubit gates during which interactions between the central qubit and the external qubits are turned on may be controlled in order to modify the evolution of the state of the central qubit and external qubits to correspond to the target Hamiltonian.

A single-qubit gate may be applied to each of the qubits $q_2$ to $q_{N-1}$ before turning on the interactions between the central qubit and external qubits, and only one further single-qubit gate may be applied to each of the qubits $q_2$ to $q_{N-1}$.

In both of the first and second aspects of the invention, the single-qubit gates may be involutory. The single-qubit gates may be Pauli $X$, $Y$ or $Z$ gates. The resource Hamiltonian and target Hamiltonian may be Ising Hamiltonians of the form

$$ H = \sum_k g_k A^0 A^k $$

where the operator $A^q$ is one of the Pauli matrices $X$, $Y$ or $Z$ operating on qubit $q$ and where the resource and target Hamiltonians have different coupling coefficients $g_k$.

The coupling coefficients $\bar{g}_k$ of the connections between the central qubit or resonator $q_0$ and external qubits $q_1$ to $q_{N-1}$ may be tuneable, in which case the method may further comprise tuning the coupling coefficients in order to shorten or reduce the number of analog blocks.

A third aspect of the invention relates to a computer system configured to perform the method of the first or second aspect described above.

A fourth aspect of the invention relates to a computer system comprising a classical processing unit configured to perform the method of the first aspect and a quantum processing unit configured to perform the method of the second aspect.

A fifth aspect of the invention relates to a computer program product comprising instructions which, when executed by a computer, cause the computer to perform the method of the first or second aspect.

A sixth aspect relates to a computer-readable medium comprising instructions which, when executed by a computer, cause the computer to perform the method of the first or second aspect described above.

**Brief Description of the Drawings**

Figure 1    A "star" topology of qubits in a quantum processing unit according to the present invention.

Figure 2    A quantum circuit diagram showing the placement of $X$ gates in a DAQC algorithm on a star topology QPU.

Figure 3    A quantum circuit diagram showing a reduced number of $X$ gates in a DAQC algorithm on a star topology QPU.

Figure 4    A quantum circuit diagram showing the banged DAQC algorithm corresponding to the stepwise DAQC algorithm of Figure 3.

Figure 5    A flow diagram depicting a method for determining a control sequence for performing DAQC on a QPU with a star topology according to the present invention.

Figure 6    A flow diagram depicting a method for performing DAQC on a QPU with a star topology according to the present invention.

**Detailed Description of the Invention**

In digital-analog quantum computation (DAQC) the "analog" evolution of the quantum states of qubits in a quantum processing unit (QPU) according to a "resource Hamiltonian" is modified by applying "digital" single-qubit gates (SQGs) to the qubits of the QPU such that the quantum states of the qubits after a time $t_F$ is the same, or at least approximates, that following evolution of the states under a different Hamiltonian, referred to as the "target Hamiltonian".

In this context, a resource Hamiltonian is an entangling Hamiltonian, denoted $\overline{H}$, according to which qubits of the QPU that are used in the computation evolve naturally, when all qubit-qubit interactions between the qubits used in the computation are turned on.

It will be appreciated that the present invention may be performed on a dedicated QPU including only the qubits required for the computation, or it may be performed on a QPU with additional qubits and qubit-qubit connections beyond those strictly required for the computation. In the latter case, the additional qubits remain unused and qubit-qubit interactions between pairs of unused qubits and between unused qubits and qubits used in the computation remain turned off. When, in the present disclosure, the phrase "turning on qubit-qubit interactions" or similar is used, it is intended to mean only turning on interactions between qubits used in the computation, unless otherwise specified.

A target Hamiltonian is an entangling Hamiltonian, denoted H, that implements a specific, desired computation. Its coupling coefficients can be chosen arbitrarily, depending on the computation to be implemented.

Under the stepwise DAQC (sDAQC) paradigm, a number of "analog blocks" are applied to the qubits, each analog block corresponding to a controllable time period t during which qubit-qubit interactions are turned on and the quantum states of the qubits are allowed to evolve under the resource Hamiltonian. Such analog blocks are therefore described by the unitary operator $U_{analog}$:

$$U_{analog}(t) = e^{-it\overline{H}} \tag{1}$$

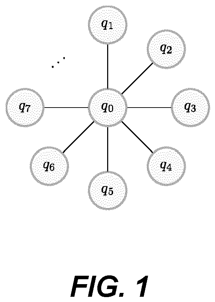

According to the present invention, the DAQC is performed on a QPU having qubits arranged in a "star" topology, which includes a "central" qubit, labelled $q_0$ and "external" qubits $q_1$ to $q_{N-1}$, where $N$ is the number of qubits used in the computation. An example of such a star topology is shown in Figure 1. The qubits are referred to as "central" and "external" due to their logical relationship and no inference should be made regarding their physical arrangement beyond the physical constraints implied by the requirement that each of the external qubits be connected to the central qubit. The central qubit may indeed be alternative referred to as a "hub" qubit, or a "common" qubit, and the external qubits may be referred to as "spoke" qubits, for example.

The qubits depicted in Figure 1 may be physical qubits or logical qubits, where logical qubits are made up of one or more physical qubits or qubit-like elements, such as a resonator, that are capable of storing a quantum state. Where a logical qubit is made up of more than one physical qubit or qubit-like elements, there exist connections between the physical qubits or qubit like elements within the logical qubit, and the connections between the logical qubit and other logical or physical qubits are distributed between the physical qubits or qubit like elements of the logical qubit. Coupling large numbers of qubits in a quantum processing unit is technically challenging as the direct coupling of one qubit to many requires increasing capacitance or inductance, resulting in larger qubit sizes. Such constraints limits both the number of qubits that can be coupled and the number of qubits that can be formed on a single die or wafer. Thus, where a large number of external qubits are employed, it may be necessary to use multiple physical qubits or qubit-like elements as a logical central qubit. The central qubit $q_0$ in particular may be a qubit-like element such as a resonator, since in the method of the present invention no single qubit gates need be applied to the central qubit.

Throughout this disclosure, where the term "qubit" is used, it should be considered to encompass both physical and logical qubits, including those formed of qubit-like elements such as resonators and waveguides.

For a star topology, such as that shown in Figure 1 a typical the resource Hamiltonian is an Ising Hamiltonian, such as a ZZ Ising Hamiltonian of the form:

$$\bar{H}_C = \sum_{k=1}^{N-1} \bar{g}_k Z^0 Z^k \qquad (2)$$

where $\bar{g}_k$ is the coupling coefficient of the $k^{th}$ qubit with the central qubit in the resource Hamiltonian. The index 0 in $Z^0$ indicates that the Z operator acts on the central qubit $q_0$ and $Z^k$ operates on the $k^{th}$ qubit $q_k$.

Such a topology is particularly suited to target Hamiltonians that are also Ising Hamiltonians, such as a ZZ Ising Hamiltonian of the form:

$$H_C = \sum_{k=1}^{N-1} g_k Z^0 Z^k \qquad (3)$$

where $g_k$ is the coupling coefficient of the $k^{th}$ qubit with the central qubit in the target Hamiltonian. Again, the index 0 in $Z^0$ indicates that the Z operator acts on the central qubit $q_0$ and $Z^k$ operates on the $k^{th}$ qubit $q_k$.

The coupling coefficients $\bar{g}_k$ of the resource Hamiltonian are determined by the physical properties of the qubits and qubit-qubit connections in the QPU and are therefore essentially fixed for QPUs without tuneable couplings. For QPUs with tunable couplings between the qubits, the accessible range of the coupling coefficients of the resource Hamiltonian is nevertheless determined by the physical properties of the qubits and qubit-qubit connections, including the properties of the tunable couplers.

By implementing a number of single-qubit gates and time-controlled analog blocks, in the case of sDAQC, or time periods between SQGs, in the case of bDAQC, the coupling coefficients of the target Hamiltonian can be simulated.

By interleaving suitable SQGs between the analog blocks, such that one SQG is performed before the analog block and one SQG is performed after the analog block, the sign of the coupling coefficient, i.e. positive or negative, can be modified. For example, the non-commutativity of X and Z gates allows X gates to be used as the SQGs for a ZZ Ising Hamiltonian, where the identity $X^a Z^b X^a = (-1)^{\delta_{ab}} Z^b$ and property $R e^{itH} R^\dagger = e^{itRHR^\dagger}$ leads to a unitary operator describing the evolution of a modified resource Hamiltonian $\bar{H}'_C$ over time $t$ of the following form, for $a \neq 0$:

$$
\begin{aligned}
U_{\bar{H}'_C}(t) &= X^a \exp(-it\bar{H}_c) X^a \\
&= X^a \exp\left(-it \sum_k \bar{g}_k Z^0 Z^k\right) X^a \\
&= \exp\left(-it \sum_k \bar{g}_k X^a Z^0 Z^k X^a\right) \qquad (4) \\
&= \exp\left(-it \sum_k (-1)^{\delta_{ak}} \bar{g}_k Z^0 Z^k\right)
\end{aligned}
$$

The unitary operator $U_{DAQC}$ describing evolution of the state of the system in which SQGs are interleaved between the analog blocks is:

$$U_{DAQC} = \prod_m X^0 X^m e^{-it_m \bar{H}_C} X^0 X^m$$

$$= \prod_m \exp(-it_m X^0 X^m \bar{H}_C X^0 X^m) \quad (5)$$

$$= \prod_m \exp\left(-i \sum_k t_m \bar{g}_k X^0 X^m Z^0 Z^k X^0 X^m\right)$$

The effect of the four $X$ gates in each term of the product in equation (5) is to flip the sign +/- of the term depending on the index m. The $X$ gates in equation (5) can therefore be re-expressed as $(-1)^{1+\delta_m + \delta k + \delta mk}$, which can be viewed as a set of elements $M_{mk}$, where $M_{mk} = -1$ for m < k and $M_{mk} = +1$ for $m \leq k$:

$$U_{DAQC} = \prod_m \exp\left(-i \sum_k t_m \bar{g}_k M_{mk} Z^0 Z^k\right)$$

$$= \exp\left(-i \sum_m \sum_k t_m \bar{g}_k M_{mk} Z^0 Z^k\right) \quad (6)$$

This set of elements $M_{mk}$ can be interpreted as a matrix M with elements $M_{mk}$. Since the unitary operator corresponding to the target Hamiltonian can be written as:

$$U_{H_C}(t_F) = \exp\left(-it_F \sum_k g_k Z^0 Z^k\right) \quad (7)$$

it can be seen that equations (6) and (7) are equal if

$$t_F \mathbf{G} = M\mathbf{t} \quad (8)$$

where t is the vectorized times $t_m$ and G is the vectorized ratio of coupling coefficients, such that each element of the vector $G_j = g_j/\bar{g}_j$. The run times t of the analog blocks required to implement the target Hamiltonian can be calculated by the inversion of matrix M:

$$\mathbf{t} = M^{-1}\mathbf{G}t_F \quad (9)$$

The individual times $t_k$ for the analog blocks $A_k$ can therefore be calculated according to the following equations:

$$\frac{t_k}{t_F} = \frac{G_k - G_{k+1}}{2}$$

$$\frac{t_{N-1}}{t_F} = \frac{G_1 + G_{N-1}}{2} \quad (10)$$

These equations always give real times $t_k \geq 0$ as long as $G_k \geq 0$ and $G_k \geq G_{k+1}$. To meet the first condition, it may be necessary to shift the phase of the evolution in equation (7), $\phi_k \rightarrow \phi_k \pm 2\pi$, in order to change the signs of the coupling coefficients of the target Hamiltonian while keeping the evolution of the target Hamiltonian exactly the same. To meet the second condition, the elements $G_k$ of G may need to be re-ordered.

The placement of SQGs for the star topology shown in Figure 1 is given by a matrix M of the form:

$$M = \begin{pmatrix} 1 & 1 & 1 & \cdots & 1 & 1 & 1 \\ -1 & 1 & 1 & \cdots & 1 & 1 & 1 \\ -1 & -1 & 1 & \cdots & 1 & 1 & 1 \\ \vdots & \vdots & \vdots & \ddots & \vdots & \vdots & \vdots \\ -1 & -1 & -1 & \cdots & 1 & 1 & 1 \\ -1 & -1 & -1 & \cdots & -1 & 1 & 1 \\ -1 & -1 & -1 & \cdots & -1 & -1 & 1 \end{pmatrix} \qquad (11)$$

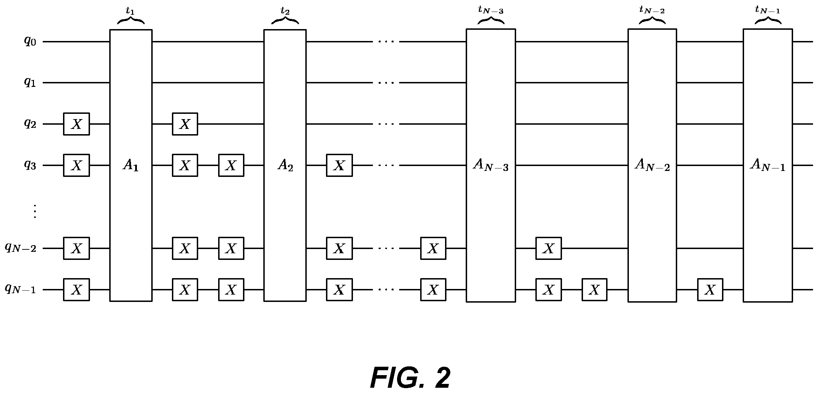

where each column in the matrix corresponds to an analog block, and each row corresponds to a coupling of the target Hamiltonian. If element $M_{ab}$ = +1, the coupling coefficient for the interaction $Z^0 Z^a$ for the $b^{th}$ analog block should be positive, and if $M_{ab}$ = -1, the coupling coefficient should be negative. For example, based on the matrix M shown in equation (11), the coupling of $q_0$ and $q_1$ is always positive, therefore no $X$ gates need to be performed on qubit $q_1$. The coupling of $q_0$ and $q_2$ is negative for the first analog block, so $X$ gates are performed before and after the first analog block on qubit $q_2$, but the remaining analog blocks are performed without performing any more $X$ gates on $q_2$. This is shown in more detail in Figure 2, which shows the placement of $X$ gates according to the matrix M shown in equation (11) on a quantum circuit diagram.

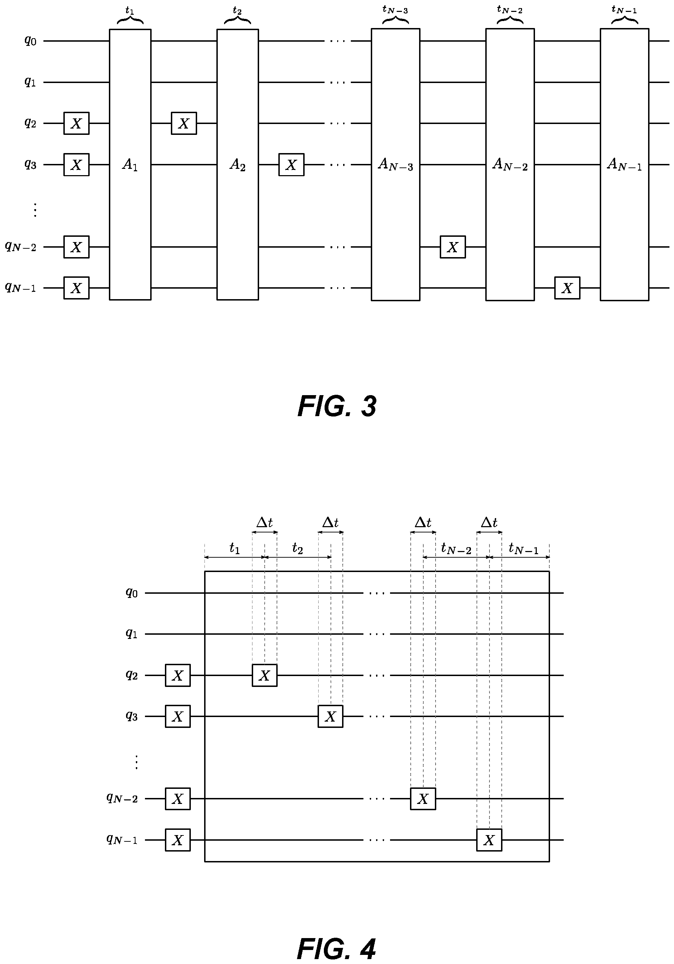

Since $X$ gates are involutory, i.e. $XX = \mathbb{I}$, where two $X$ gates are applied consecutively in Figure 2, they do not need to be performed. As a result, the circuit diagram of Figure 2 can be simplified, resulting in the quantum circuit diagram of Figure 3.

While the above has been described in context of analog blocks where SQGs are applied before and after each block, i.e. in the context of stepwise DAQC, it will be appreciated that the same derivation is equally applicable to a context in which there are no gaps between analog blocks, i.e. without turning the interactions between qubits on or off, and SQGs are applied simultaneously with analog blocks, i.e. banged DAQC. Where bDAQC is used, a SQG performed "before" the analog block in the description above is performed at the beginning of the analog block, and a gate performed "after" an analog block is performed at the end of an analog block.

The quantum circuit diagram of Figure 4 depicts a quantum circuit for bDAQC, where the times $t_k$ for each analog block referred to above are the time periods that elapse between the $X$ gates. Since real-world quantum gates cannot be applied instantaneously, there is some length of time $\Delta t$ required to perform the $X$ gates. As a result, the time period between the start of the continuous analog block and the start of the first $X$ gate in Figure 4 is $t_1 - \Delta t/2$, the time period between subsequent $X$ gates is $t_k - \Delta t$, and the time period between the final $X$ gate and the end of the continuous analog block is $t_{N-1} - \Delta t/2$. Alternatively to the circuit shown in Figure 4, the first $X$ gates on qubits $q_2$ to $q_{N-1}$ may also be applied simultaneously with the analog block.

However, some of the ZZ terms in the resource Hamiltonian act on qubit k and thus "overlap" with the $X^k$ term. Due to the non-commutativity of the operators $[Z^a, X^a] = 2iY^a$, this operation is not equal to the evolution of the analog block and the $X$ gate independently. Each term $Z^j Z^m$ thus introduces a mis-rotation that depends on the population of qubits $j$ and $k$. The error introduced by the non-commutativity of the operators, which is a necessary characteristic of the operators in order to flip the signs of the coupling coefficients, is proportional to the number of ZZ terms that overlap with the $X_a$ gate. In the circuit shown in Figure 4, the number of $X$ gates applied simultaneously with the analog block is significantly reduced compared to a more general circuit required to perform the method on other qubit topologies. The error is therefore significantly reduced in the circuit shown in Figure 4 as a result of the star topology of the QPU compared to other QPU topologies.

The above has been described in the context of a ZZ Ising Hamiltonian comprising a sum of ZZ terms and single-qubit $X$ gates; however, the invention is also applicable to other two-body resource and target Hamiltonians made up of sums of XX, in which case the SQGs may be Z gates, or YY terms, in which case the SQGs gates may be X gates, for example, since the gates follow the relationship $Z^a X^b Z^a = (-1)^{\delta_{ab}} X^b$ and $X^a Y^b X^a = (-1)^{\delta_{ab}} Y^b$. The use of ZZ, XX or YY Hamiltonians therefore does not significantly change the derivation presented above and ultimately still leads to equation (9), which fully encodes the problems of determining the analog block run times and identifying a sequence of single-qubit gates corresponding to matrix M.

Furthermore, by selecting different SQGs to be applied to different qubits, resource and target Hamiltonians that are sums of mixed terms, i.e. sums of XY, YX, XZ, ZX, YZ and ZY terms, or even resource and target Hamiltonians that have different terms for different couplings between the central qubit and external qubits can be used with the method of the present invention, as long as the SQGs S performed before and after each analog block follow the relationship $S^a D^b S^a = (-1)^{\delta_{ab}} D^b$ with the operator D in the coupling of the central and external qubits. The large reduction in the number of SQGs shown in Figure 3 and Figure 4 can be achieved as long as the SQGs S are involutory.

Based on the above, the present invention includes a method for determining a control sequence for performing DAQC on a QPU with a star topology. The control sequence may be a quantum circuit or equivalent, an intermediate representation such as OpenQASM, Alternatively, the control sequence may be an intermediate representation such as OpenQASM, at a hardware interaction level such as defining control signals to be applied to the qubits, or any suitable description of the parameters needed to perform the DAQC, such as defining the couplings to be turned on/off, timings and locations of single qubit gates.

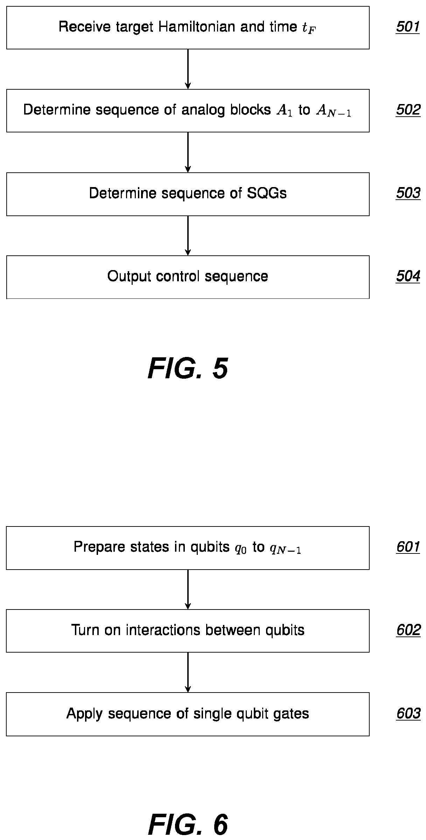

The method is depicted in the flow diagram of Figure 5. The method of Figure 5 is typically performed on a classical computer in order to determine the control sequence to be applied to a quantum computer. The method may therefore be performed in a hybrid classical-quantum computer system.

At step 501, the target Hamiltonian and evolution time $t_F$ are received. The target Hamiltonian and evolution time $t_F$ may be input directly by a user, may be received from another computer program running on the same computer or on a networked computer, or may be retrieved from memory or from a network location. The target Hamiltonian may be received in equation form, similar to that identified above in equation (3) or (7). Alternatively, the characteristics of the target Hamiltonian, such as the coupling coefficients $g_k$ may be received. The coupling coefficients may be received in an array or list, for example $[g_0, g_1, g_2, ..., g_{N-1}]$, or any other suitable format.

The resource Hamiltonian and/or its coupling coefficients $\bar{g}_k$ may already be known, for example in a hybrid-classical computer system where the classic computer component already has access to key information defining the quantum system. Alternatively, the resource Hamiltonian and/or its coupling coefficients may also be received or retrieved by the method at step 501.

At step 502, the method determines the times $t_1$ to $t_{N-1}$ of the sequence of analog blocks $A_1$ to $A_{N-1}$. The times are calculated according to equations (10) above based on ratios of the coupling coefficients of the resource and target Hamiltonians. The determined times $t_k$ are used to determine the sequence of analog blocks $A_k$ to be applied to the qubits $q_0$ to $q_{N-1}$: the analog blocks $A_k$ are applied in sequence according to their index k, except for any analog blocks with time $t_k = 0$, which do not need to be applied.

At step 503, the sequence of SQGs to be applied in order to flip the signs of the coupling coefficients in the resource Hamiltonian is determined based on the determined sequence of analog blocks. The SQGs are applied to qubits $q_2$ to $q_{N-1}$ such that single-qubit gates are applied to qubits $q_{j+1}$ to $q_{k-1}$ at after each analog block $A_j$ with non-zero duration $t_j$ and $j < N - 1$, and where $A_k$ is the next analog block with non-zero duration $t_k$. This definition results in a placement of SQGs equivalent to that described above, following the process of applying SQGs to every qubit $q_{j+1}$ to $q_{N-1}$ before and after every analog block $A_j$ and subsequently removing pairs of consecutively applied SQGs. Such a process may be followed in order to determine the placement of SQGs. As described above, in order for consecutive pairs of SQGs to cancel, the SQGs should be involutory. Where the resource and target Hamiltonians comprise sums of two-qubit terms of Pauli *X, Y* and/or *Z* operators, the SQGs are themselves Pauli *X, Y* or *Z* operators.

Step 503 also includes placing SQGs on all qubits $q_2$ to $q_{N-1}$ before the first analog block.

Following step 503, the full control sequence required to perform DAQC on the star topology QPU is known. At an optional set 504, the control sequence may be output. Outputting the control sequence may comprise providing the output in some machine- or human-readable format such as a quantum circuit or intermediate representation such as OpenQASM. ,Alternatively, the control sequence may be an intermediate representation such as OpenQASM, at a hardware interaction level such as defining control signals to be applied to the qubits, or any suitable description of the parameters needed to perform the DAQC, such as defining the couplings to be turned on/off, timings and locations of single qubit gates.

Again, while the method of Figure 5 has been described in the context of stepwise DAQC, it will be appreciated that it applies equally to banged DAQC, in which case the determined sequence of analog blocks $A_1$ to $A_{N-1}$ are applied consecutively, without turning the interactions between qubits on or off, a SQG performed "before" the analog block in the description above is performed at the beginning of the analog block, and a gate performed "after" an analog block is performed at the end of an analog block.

Figure 6 is a flow chart depicting a method of performing a digital-analog quantum computation algorithm on a star topology QPU according to the present invention. At step 601, initial quantum states are prepared in the qubits $q_0$ to $q_{N-1}$. Preparing the initial quantum states may comprise preparing $|0\rangle$ states in each qubit and manipulating the qubit states by the application of quantum gates, such as Pauli *X, Y* and *Z* gates and the Hadamard gate *H*. Alternatively, preparing the initial quantum states may comprise performing another quantum computation algorithm, such as a quantum Fourier transform, such that the resulting quantum states of the previous quantum algorithm are stored in the qubits $q_0$ to $q_{N-1}$.

At step 602, interactions between the central qubit $q_0$ and each external qubit $q_1$ to $q_{N-1}$ are turned on such that the quantum states of the central qubit and external qubits evolve according to a resource Hamiltonian.

At step 603, a sequence of SQGs is applied to the external qubits to modify the evolution of the quantum states of the central qubit and external qubits such that the quantum state of the central qubit and external qubits after a time period $t_F$ corresponds to evolution of the quantum states according to a target Hamiltonian after the time period $t_F$.

In the case of bDAQC, the sequence of two-qubit gates and the time intervals between the application of single-qubit gates are controlled in order to modify the evolution of the state of the central qubit and external qubits to correspond to the target Hamiltonian. The time intervals correspond to the analog blocks described above.

In the case of sDAQC, interactions between the central qubit and the remaining external qubits are turned off before each single-qubit gate is applied to the central qubit and one of the external qubits and turned back on after each single-qubit gate is applied to the central qubit and one of the external qubits. The periods during which interactions are turned on correspond to the analog blocks described above. Where there are fewer analog blocks than external qubits $q_1$ to $q_{N-1}$, i.e. fewer than $N$ - 2 analog blocks, some of the SQGs are applied parallel. This arises when the ratio between the coupling coefficients $g_k$ and $\bar{g}_k$ of the target and resource Hamiltonians for coupling k is equal to the ratio of coupling coefficients $g_{k+1}$ and $\bar{g}_{k+1}$ for the subsequent coupling k + 1, resulting in an analog block with $t_k = 0$.

As described above, it will be understood that SQGs may be applied to qubits $q_2$ to $q_{N-1}$ before the interactions between the central qubit and each external qubit are turned on. In the case of bDAQC, these SQGs may be applied before the interactions are turned on, or may be applied at the start of the time period for which the interactions are turned on. In all circumstances and for both sDAQC and bDAQC, only one further SQG is applied to each qubit $q_2$ to $q_{N-1}$ due to the use of a QPU with a star topology.

The description of the system and method above has generally been presented in the context of a quantum processing unit with fixed couplings between qubits; however, it will be appreciated that the method is equally applicable to the quantum processing unit with tunable couplings. Indeed, the use of tunable couplings can even provide advantages, such as allowing for shorter or fewer analog blocks with suitable adjustments to the coupling coefficients within the accessible range of values for those coefficients.

## Claims

1. A computer-implemented method for determining a control sequence for performing digital-analog quantum computation, DAQC, on a quantum processing unit, the quantum processing unit comprising a central qubit or resonator $q_0$ and a plurality of external qubits $q_1$ to $q_{N-1}$, each external qubit being connected directly to the central qubit, the method comprising:

    - receiving coupling coefficients of a target Hamiltonian and a time $t_F$ after which the quantum state of a system described by the target Hamiltonian is to be calculated;
    - determining a sequence of analog blocks to be applied to the central and external qubits, during which the quantum states of the central qubit and external qubits evolve according to a resource Hamiltonian; and
    - determining a sequence of single-qubit gates to be applied to the external qubits.

2. The method of claim 1, wherein determining the sequence of analog blocks to be applied to the central and external qubits comprises determining the durations $t_1$ to $t_{N-1}$ of the analog blocks $A_1$ to $A_{N-1}$ based on the coupling coefficients of the target Hamiltonian and the resource Hamiltonian.

3. The method of claim 2, wherein determining the sequence of analog blocks $A_k$ further comprises placing the analog blocks in sequence based on their indices k and omitting analog blocks $A_k$ with duration $t_k = 0$.

4. The method of any preceding claim, wherein determining the sequence of single qubit gates comprises placing the single qubit gates in the sequence such that single-qubit gates are applied to qubits $q_{j+1}$ to $q_{k-1}$ at the end of or after each analog block $A_j$ with non-zero duration $t_j$ and $j < N$ - 1, and where $A_k$ is the next analog block with non-zero duration $t_k$.

5. The method of claim any preceding claim, wherein the analog blocks are applied continuously, and the single-qubit gates are applied simultaneously with the analog blocks at the end of each analog block.

6. The method of any of claims 1 to 4, wherein the analog blocks are applied discretely, and the single-qubit gates are applied serially in between the analog blocks.

7. The method of any preceding claim, wherein determining a sequence of analog blocks comprises determining the time durations $t_1$ to $t_{N-1}$ of the analog blocks according to the following equations:

$$\frac{t_k}{t_F} = \frac{G_k - G_{k+1}}{2}$$

$$\frac{t_{N-1}}{t_F} = \frac{G_1 + G_{N-1}}{2}$$

where $G_j = g_j/\overline{g}_j$, $g_j$ is the $j^{th}$ coupling coefficient of the target Hamiltonian and $g_j$ is the $j^{th}$ coupling coefficient of the resource Hamiltonian.

8. The method of claim 7, wherein determining a sequence of analog blocks comprises determining a sequence of analog blocks with a non-zero duration $t_k$.

9. The method of any preceding claim, wherein determining a sequence of single-qubit gates comprises placing single-qubit gates applied to qubits $q_{j+1}$ to $q_{N-1}$ at the beginning and end, or before and after each analog block $A_j$ with non-zero duration $t_j$ and $j < N$ - 1, and removing consecutive pairs of single-qubit gates.

10. The method of any preceding claim, wherein the sequence of single-qubit gates further comprises applying single-qubit gates to all qubits $q_2$ to $q_{N-1}$ at the start of or before the first analog block.

11. The method of any preceding claim, wherein the method further comprises outputting the determined control sequence.

12. A method for performing digital-analog quantum computation, DAQC, on a quantum processing unit, the quantum processing unit comprising a central qubit or resonator $q_0$ and a plurality of external qubits $q_1$ to $q_{N-1}$, each external qubit being connected directly to the central qubit, the method comprising:

- preparing initial quantum states in the central qubit and external qubits;
- turning on interactions between the central qubit and external qubits such that the quantum states of the central qubit and external qubits evolve according to a resource Hamiltonian;
- applying a sequence of single-qubit gates to the external qubits to modify the evolution of the quantum states of the central qubit and external qubits such that the quantum state of the central qubit and external qubits after a time period $t_F$ corresponds to evolution of the quantum states according to a target Hamiltonian after the time period $t_F$.

13. The method of claim 12, wherein the sequence of two-qubit gates and time intervals between the application of single-qubit gates are controlled in order to modify the evolution of the state of the central qubit and external qubits to correspond to the target Hamiltonian.

14. The method of claim 12, wherein the method further comprises:

- before each single-qubit gate is applied one of the external qubits, turning off interactions between the central qubit and the remaining external qubits; and
- after each single-qubit gate is applied to one of the external qubits, turning interactions between the central qubit and the remaining external qubits back on.

15. The method of claim 14, wherein the sequence of single-qubit gates and time periods between the application of single-qubit gates during which interactions between the central qubit and the external qubits are turned on are controlled in order to modify the evolution of the state of the central qubit and external qubits to correspond to the target Hamiltonian.

16. The method of any of claims 12 to 15, wherein a single-qubit gate is applied to each of the qubits $q_2$ to $q_{N-1}$ before turning on the interactions between the central qubit and external qubits, and wherein only one further single-qubit gate is applied to each of the qubits $q_2$ to $q_{N-1}$.

17. The method of any preceding claim, wherein the single-qubit gates are involutory.

18. The method of claim 17, wherein the single-qubit gates are Pauli $X$, $Y$ or $Z$ gates.

19. The method of any preceding claim, wherein the resource Hamiltonian and target Hamiltonian are Ising Hamiltonians of the form

$$H = \sum_k g_k A^0 A^k$$

where the operator $A^q$ is one of the Pauli matrices $X$, $Y$ or $Z$ operating on qubit q and where the resource and target Hamiltonians have different coupling coefficients $g_k$.

20. The method of any preceding claim, wherein the coupling coefficients of the connections between the central qubit or resonator $q_0$ and external qubits $q_1$ to $q_{N-1}$ are tuneable, and wherein the method further comprises tuning the coupling coefficients in order to shorten or reduce the number of analog blocks.

21. A computer system configured to perform the method of any preceding claim.

22. A computer system comprising a classical processing unit configured to perform the method of any of claim 1 to 11 and a quantum processing unit configured to perform the method of any of claims 12 to 20.

23. A computer program product comprising instructions which, when executed by a computer, cause the computer to perform the method of any of claims 1 to 2019.

24. A computer-readable medium comprising instructions which, when executed by a computer, cause the computer to perform the method of any of claims 1 to 20.

**FIG. 1**

FIG. 2

FIG. 3

FIG. 4

| Receive target Hamiltonian and time $t_F$ | *501* |
|---|---|

$\downarrow$

| Determine sequence of analog blocks $A_1$ to $A_{N-1}$ | *502* |
|---|---|

$\downarrow$

| Determine sequence of SQGs | *503* |
|---|---|

$\downarrow$

| Output control sequence | *504* |
|---|---|

## FIG. 5

| Prepare states in qubits $q_0$ to $q_{N-1}$ | *601* |
|---|---|

$\downarrow$

| Turn on interactions between qubits | *602* |
|---|---|

$\downarrow$

| Apply sequence of single qubit gates | *603* |
|---|---|

## FIG. 6

| | Europäisches Patentamt European Patent Office Office européen des brevets | **EUROPEAN SEARCH REPORT** | Application Number EP 22 16 1497 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ADRIAN PARRA-RODRIGUEZ ET AL: "Digital-Analog Quantum Computation", ARXIV.ORG, CORNELL UNIVERSITY LIBRARY, 201 OLIN LIBRARY CORNELL UNIVERSITY ITHACA, NY 14853, 16 July 2020 (2020-07-16), XP081702413, DOI: 10.1103/PHYSREVA.101.022305 * abstract; figures 1, 2, 5 * * section I, lines 64-74 * * section VI * * section V-B * * section V, lines 10-11 * * section III-A * * equations (1)-(4) * * section IV * * section V-A * * section III, lines 5-19 * * section V, lines 24-25 * ----- | 1-24 | INV. G06N10/20 |
| A | FRANCESCO TACCHINO ET AL: "Quantum computers as universal quantum simulators: state-of-art and perspectives", ARXIV.ORG, CORNELL UNIVERSITY LIBRARY, 201 OLIN LIBRARY CORNELL UNIVERSITY ITHACA, NY 14853, 8 July 2019 (2019-07-08), XP081439186, * the whole document * ----- | 1-24 | TECHNICAL FIELDS SEARCHED (IPC) G06N |

The present search report has been drawn up for all claims

| Place of search | Date of completion of the search | Examiner |
|---|---|---|
| The Hague | 29 August 2022 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)